# EUROPEAN PATENT SPECIFICATION

(11) **EP 2 380 431 B1**
(45) Date of publication and mention of the grant of the patent: **17.08.2016**
(21) Application number: 11166359.7
(22) Date of filing: 22.06.2007
(51) Int. Cl.: A01K 1/00

(54) **Method and apparatus for cooling an animal**
Verfahren und Vorrichtung zum Kühlen eines Tiers
Procédé et appareil de refroidissement d'un animal

(43) Date of publication of application: 26.10.2011
(62) Divisional of application: 07252552.0
(73) Proprietor: DeLaval Holding AB, 147 21 Tumba (SE)
(72) Inventor: Manneke, Peter, 18910, Beit-Hashita (IL)
(74) Representative: Lilliehorn, Tobias

(56) References cited:
- EP-A- 1 230 851
- EP-A- 1 260 137
- WO-A-01/10197
- WO-A-98/04121
- US-B1- 6 418 728

## Description

The present invention relates to a method in which an animal is cooled and to apparatus for cooling an animal, in particular a cow.

It is well known that the milk productivity of an animal, such as a cow, is adversely affected by high ambient temperatures which result in the animal suffering from thermal discomfort or heat stress. For example, the current Holstein breed of cows, which is widely used by the dairy industry across the world, are known to begin suffering the affects of heat stress at temperatures around 15°C. However, ambient temperatures in excess of 35°C are frequently experienced in many regions of the world where dairy farming is undertaken (for example, Israel and the USA) and, in order to avoid an undue reduction in milk productivity as a result, it is common for cooling systems to be used in an attempt to maintain heat stress at an acceptable level.

A cooling system currently used in Israel and the USA makes use of a sprinkler system which distributes water droplets on the back and sides of a cow. A cow is typically subjected to a water flow rate of between 20 litres per minute and 25 litres per minute for between 40 and 50 seconds. The sprinkler system is of a type that produces large droplets of water which impact on the fur of the cow with a tendency to flatten the fur and reduce its thickness. In this way, the water droplets tend to soak through to the skin of the animal and tend to displace warm air trapped between the fur and the skin. This in turn reduces the insulation effect provided by the fur.

Also, in addition to the sprinkler system, high capacity cooling fans constantly blow air across the wetted skin of the animal so as to assist in evaporating the water. This further improves the cooling effect.

The aim of the sprinkler and fan cooling system is to reduce the temperature of the cow by 1°C. This can take almost one hour and is undertaken prior to milking and up to five to six times a day.

This prior art cooling system, generally has a cooling area located prior to the milking stall so that a cow may be cooled and thereby made more comfortable before being milked. However, once milking has been completed, the cow is generally released directly to a feeding/resting area. This can be problematic, particularly where the temperature of the cow has increased above an acceptable level.

In areas of the world where ambient temperatures are not consistently so high as to require a cow to be routinely cooled, it is known to monitor the level of heat stress experienced by a cow and to take a decision as to whether or not cooling is necessary at the present time. This decision is taken on the basis of whether or not a predetermined acceptable level of heat stress is exceeded. If it is determined that a cow should be cooled, then the particular means provided for cooling the animal will be operated until it is determined that the level of heat stress has reduced to within acceptable limits.

Known apparatus for cooling a cow is disclosed in EP 1 119 137 B1. This prior art apparatus comprises means for wetting an animal and for directing an airflow over the wetted part of the animal.

It will be understood that these prior art methods and apparatus (for use in cooler regions of the world) merely assess whether or not cooling is required so that a decision can be made as to whether or not cooling should begin. No decision is made as to whether one particular method of cooling will be more effective than another method of cooling for the particular animal in question or for the particular symptoms of heat stress being presented. Accordingly, the method of cooling employed may well be inefficient in view of the particular condition of the animal or in view of the particular environmental conditions to which the animal is exposed.

These prior art methods and apparatus also require a continuous or repeated monitoring of the level of stress experienced by an animal so that a further decision may be taken as to whether or not cooling is required. In this respect, where milking is an automated process in which an Automatic Milking Station (AMS) is used (in other words, where milking is undertaken in a milking station provided with a robot for attaching teat cups to the teats of an animal), it may well be the case that the condition of the particular animal to be milked can only be fully determined when the animal has entered the AMS and is stood adjacent various condition sensing devices. Although prior art methods of cooling the animal may be employed whilst the animal remains in the AMS, it will not be possible for the condition of the animal to be continuously or repeatedly determined once the animal has left the AMS. As such, once the animal has left the AMS, it is not possible for the animal to be cooled in a controlled fashion with reference to its present condition. This can potentially result in the animal being insufficiently cooled, which may result in continued thermal discomfort. Milk productivity is adversely affected as a result.

It is an object of the present invention to provide a method and apparatus which addresses the aforementioned problems with the prior art.

A first aspect of the present invention provides a method of increasing the milk productivity of an animal, in particular a cow, comprising the step of determining the condition of the animal and/or of the environment in which the animal is located; characterised by the further steps of selecting a method of cooling the animal wherein the selected cooling method is chosen on the basis of said determined condition; and cooling the animal with the selected cooling method.

In accordance with the present invention, the condition of an animal may be determined and, on the basis of this condition, a method of cooling the animal may be selected. It will be understood that the condition of the animal may be determined, at least in part, by reference to the medical history of the particular animal in question (in other words, by reference to medical events and health problems the animal has experienced) and any known ongoing medical factors associated with that animal (e.g. pregnancy). For instance, it may be known that the particular animal in question is adversely affected by a cooling of one specific area of its body (perhaps because of an injury sustained to that specific area) and, in view of this, the method selected for cooling the animal may be one which avoids said specific area of the animal.

It will also be understood that, in view of the condition of the animal, the cooling method may be selected so as to improve the thermal comfort of the animal in the most efficient way. Also, the selection of the cooling method is such that, upon implementation of the method, the condition (for example, the thermal comfort) of the animal will be brought to within an acceptable limit. In other words, the effectiveness of the cooling method is predicted as being sufficient to achieve the desired amount of cooling and it is not therefore necessary for the condition of the animal to be continuously or repeatedly monitored. This allows the cooling method to be implemented, at least in part, when it is not possible to sense the condition of the animal (for example, when a cow has left an AMS).

It will also be understood that the environmental conditions in which an animal is located may influence the cooling method to be used and the selected cooling method may be chosen on the basis of the environmental conditions *per se* or in combination with the determined condition of the animal in question.

Preferably, the step of selecting a method of cooling comprises the step of selecting the duration of cooling required in order to bring the condition to within an acceptable limit. The step of selecting a method of cooling may also comprise the step of selecting one or more of a plurality of cooling techniques available for cooling the animal. The one or more selected cooling techniques may be chosen in order to bring the condition of the animal to within an acceptable limit within a predetermined acceptable period of time. It is also preferable for said plurality of available cooling techniques to comprise one or more of (i) wetting the animal; (ii) blowing air over the animal; (iii) wetting the animal and blowing air over the wet parts of the animal; and (iv) reducing the temperature of ambient air in the vicinity of the animal.

Furthermore, said plurality of available cooling techniques may comprise cooling an area of the animal comprising the back and/or sides of the animal by flowing a fluid over said area. Ideally said fluid is air. Alternatively, said fluid may comprise water. Nevertheless, said fluid may initially comprise water, so as to wet said area of the animal, and may then be air, so as to evaporate said water from said area.

Preferably, the water may be entrained in a flow of air. Also, the air may have been cooled so as to have a temperature below that of the ambient air. Also, the water may have been cooled so as to have a temperature below that of the ambient air.

It is particularly preferable for the condition of the animal to be determined with reference to a signal sent from a transmitter carried by the animal. It is preferable for this signal to indicate the temperature of the animal's skin and/or udder. Ideally, the transmitter is *carried in vivo* by the animal and may be a bolus. The signal sent by the transmitter may be a radio frequency signal. Also, it will be understood that the condition of the animal may be the level of thermal comfort of the animal. The condition of the animal may be determined with reference to the respiration rate of the animal. Also, the condition of the animal is preferably determined when the animal is located in a milking stall. The animal may be cooled with the selected cooling method in the milking stall. Ideally, the animal is cooled before entering the milking stall. The animal may be cooled with the selected cooling method after having left the milking stall. Furthermore, the animal may be cooled after having left the milking stall as well as before entering the milking stall, said cooling ideally being completed on both occasions with the animal located in substantially the same area. In these circumstances, the animal may also be cooled after leaving the milking stall with the selected cooling method. It will be understood that the same cooling facility (for example, the same cooling yard) may be used to cool the animal both before and after milking (i.e. before the animal enters the milking stall and after the animal leaves the milking stall). Passage of the animal from the milking stall to the cooling area may be controlled (for example, by means of one or more gates) so that the animal is only directed to the cooling area if cooling is determined as being required.

A second aspect of the present invention provides a method comprising steps of:
(i) cooling an animal, in particular a cow, in a cooling facility;
(ii) milking said animal; and
(iii) determining whether further cooling of the animal is required;
characterised by the steps of:
(iv) returning the animal to said cooling facility if further cooling is determined as being required.

Ideally the method comprises the step of:
(v) further cooling the returned animal in said cooling facility.

A third aspect of the present invention provides apparatus for undertaking the aforementioned methods.

A fourth aspect of the present invention provides apparatus for automatically undertaking the aforementioned methods.

A fifth aspect of the present invention provides a milking facility for milking an animal, in particular a cow, the milking facility comprising: a cooling area comprising means for cooling an animal; a milking area comprising means for milking an animal; an animal control means for controlling the route along which an animal is able to walk, the cooling and milking areas being located so that an animal is able to walk from the cooling area to the milking area during use of the facility; the facility being characterised in that the control means selectively directs an animal back to said cooling area after milking of the animal in the milking area.

Ideally, the milking facility further comprises means for determining whether or not cooling of the animal is required. It is also preferable for said control means to direct an animal back to said cooling area in response to a determination from said determining means that cooling of the animal is required. The determining means may comprise a receiver for receiving an RF signal transmitted by a transmitter carried by an animal.

It will be understood that the present invention has the advantage over the prior art of providing a method and apparatus which cools an animal in the most appropriate fashion having regard to the need for efficiency and to the health of the animal in question. A necessary cooling is also provided without the need for continuous or repeated monitoring of the animal as in the prior art. In this latter regard, it will be understood that the present invention allows the condition of an animal to be changed, and thereby brought to within acceptable parameters, without the need for a feedback system which assesses the condition of the animal during the cooling process so as to determine whether or not the cooling process should continue.

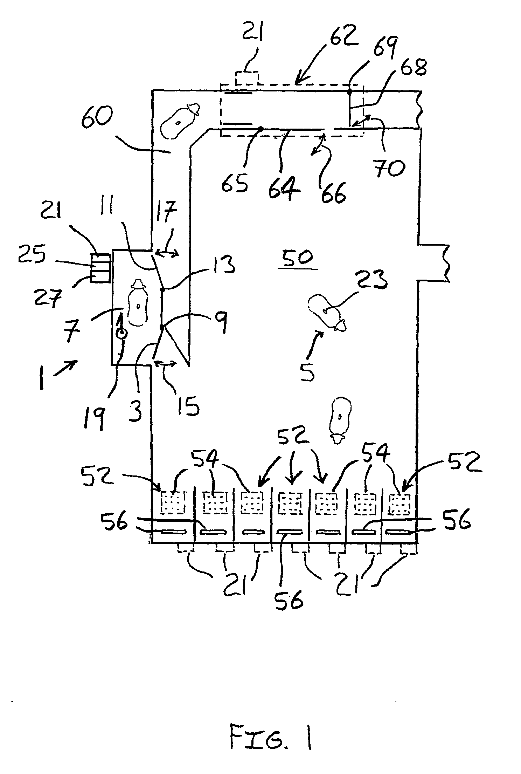

An embodiment of the present invention will now be described with reference to the accompanying drawing (Figure 1) which shows a plan view of a milking facility comprising an Automatic Milking Station (AMS).

A schematic plan view of a milking facility according to the present invention is shown in Figure 1 of the accompanying drawings. The facility has a milking area 1 comprising features characteristic of a conventional AMS, as will be understood by those skilled in the art. In this regard, an entry gate 3 is provided for allowing a cow 5 to enter a milking stall 7. The entry gate 3 automatically rotates about a hinge 9 into an open position, when the milking stall 7 is unoccupied, so as to allow access to the milking stall 7. Once a cow 5 enters the milking stall 7, the entry gate 3 rotates about the hinge 9 into a closed position behind the cow 5. An exit gate 11 is also provided and automatically rotates about a hinge 13 into an open position once milking of the cow 5 has been completed.

The entry and exit gates 3, 11 are shown located in their closed positions in Figure 1, however the movement of these gates 3, 11 about their respective hinges 9, 13 is indicated by arrows 15, 17.

As will be understood by those skilled in the art, when the cow 5 is positioned within the milking stall 7, the milking of the animal is completed in an entirely automatic fashion. Firstly, detectors/sensors search for the teats so as to determine their location. Teat cups are then attached to the teats by means of a robot arm 19. The milking operation is then begun and is monitored by various sensors (for example, a milk meter, conductivity sensors, and temperature sensors). Finally, the teat cups are automatically detached once the milking operation has been completed. The completion of the milking operation is itself determined by means of one or several sensors. A complete record of the milking operation (including all measured parameters, such as conductivity) is stored in a computer. A record of information relating to all previous milking operations from previous lactations, and for all animals in a herd, is established. This may also include information entered manually into the computer by a farmer (such as when a specific animal was inseminated and when the animal is expected to give birth). In this way, the medical history and past performance of every animal in a herd may be kept up to date and made readily available.

Once milking has been completed, the exit gate 11 opens as mentioned above so as to allow the cow 5 to leave the milking stall 7. Once the milking stall 7 has been vacated, the exit gate 11 is returned to its closed position as shown in Figure 1 and the entry gate 3 will be moved to its open position so as to allow a further cow to enter the stall 7.

The milking facility shown in Figure 1 further comprises a cooling area 50 through which a cow 5 must walk in order to gain access to the milking area 1. The cooling area 50 comprises a number of cooling bays 52 (seven are shown) which each have an over-head sprinkler 54 for dispensing large droplets of water onto the back and/or sides of a cow located in the cooling bay. Each bay 52 also has a high capacity cooling fan 56 for blowing air over the back and/or sides of the cow located in the bay 52. A transmitter/receiver may also be provided with each bay 52. One purpose of the transmitters/receivers is to allow the particular cow located in any given bay 52 to be identified. The transmitters/receivers are discussed in more detail below.

In addition to the cooling bays 52, or as an alternative thereto, the cooling area 50 may be provided with a sprinkler and cooling fan system for cooling the entire cooling area 50. In this way, a cow does not need to be positioned in a particular bay 52 in order to be cooled.

Each sprinkler has an output capacity of between 20 litres per minute and 25 litres per minute, and water droplets are typically sprayed onto the back and/or the sides of a cow at this flow rate for between 40 and 50 seconds. The high capacity cooling fans run constantly so as to assist in evaporating water from the skin of the cow.

It will be appreciated that the milking area 1 may also be provided with a sprinkler and fan cooling system, however, given the volume and flow rate of water involved in the cooling process, the use of this type of cooling system in an Automated Milking System is not desirable (primarily because of the proximity of electrical components).

The milking facility shown in Figure 1 is arranged so that, on leaving the milking area 1, a cow 5 is directed along a walk way 60 to a Smart Selection Gate (SSG) 62. The Smart Selection Gate 62 allows the cow 5 to be either directed back to the cooling area 50 by means of a first gate 64 (rotatable about a hinge 65 in the direction indicated by arrow 66) or to a further holding area (not shown) by means of a second gate 68 (rotatable about a hinge 69 in the direction indicated by arrow 70).

In accordance with the present invention, the facility shown in Figure 1 is provided with a transmitter/receiver (positioned at one or more of the locations identified by reference numeral 21 in the accompanying drawings). Each transmitters/receivers is adapted for receiving a radio frequency signal transmitted from a bolus 23 *carried in vivo* by a cow 5. The radio frequency signal transmitted by the bolus 23 to the transmitter/receiver provides a body temperature measurement for the cow 5 and an indication of the thermal discomfort experienced by the cow 5.

The bolus 23 is capable of sensing a number of parameters. These parameters include the animal's body temperature, heart rate, and respiration rate. However, since the bolus is located in the stomach of the animal, if the particular animal condition to be determined is skin temperature or udder temperature, then an appropriate adjustment to the body temperature measurement obtained from the bolus may be required. Alternatively, suitable temperature sensors may be attached to the skin and/or udder of the animal in order to acquire a skin/udder temperature measurement. These temperature sensors may be carried by an animal as an alternative to the bolus or in addition to the bolus.

The milking facility may also be provided with means for assessing the activity of a cow. In this regard, it is known that a cow under heat stress will tend to exhibit an increased level of activity. Specifically, the number of steps taken by a cow in a given period of time will tend to increase as the cow becomes increasingly agitated by thermal discomfort. This indication of heat stress can be measured through the use of pressure sensors or weighing devices provided in the floor of the milking facility. More specifically, a pressure sensor or weighing device may be provided in the floor of the milking stall 7 under each foot of the animal. A total of four devices would be thereby provided for sensing and recording the movement of an animal being milked. If a high number of steps is measured, then it may be determined on this basis that the animal is experiencing a condition of heat stress.

The measured activity of an animal may be considered in combination with temperature measurements in order to determine the condition of the animal and allow the animal to be returned to the cooling area 50 for appropriate cooling as necessary. It will be understood that further parameters in addition to the animal's temperature and/or activity will allow the level of thermal discomfort to be determined and, when considered in combination with the temperature and/or activity measurements, may potentially allow for a more accurate determination to be made. In this latter regard, reference may be made to the milk yield of a particular cow so as to provide an indication of whether or not heat stress is being experienced. For example, the milk yield for a particular cow may be unusually low when compared with a recorded history of milk yield for that animal. Also, historical records may indicate that a particularly low level of milk yield is generally associated with an unacceptable level of thermal discomfort for the animal in question. Accordingly, measured values of milk yield may provide a further parameter for allowing the condition of an animal to be determined and an assessment of the cooling requirement to be made.

The cow 5 is also provided with a radio frequency identification (RFID) tag which may be interrogated by the or each transmitter/receiver. The RFID tag (not shown) allows a particular cow 5 to be identified and this, if deemed necessary, allows reference to be made to the medical history and past performance (e.g. milk yield) of the cow 5. Both of the RF signals (received from the bolus 23 and the RFID tag) allow the condition of the cow 5 to be determined so that the cow 5 can be directed back to a cooling area as necessary and so that an appropriate method for cooling the cow 5 can be selected.

The facility also includes sensors 25 for detecting the ambient environmental conditions (for example, temperature, pressure and humidity).

It will be understood therefore that the or each transmitter/receiver allows a determination of the condition of a particular cow, whilst the sensors 25 determine the ambient conditions generally affecting cows located in the vicinity of the facility.

Once the particular condition of the cow 5 located within the milking stall 7 has been determined and the ambient environmental conditions have also been determined, a suitable cooling regime is automatically selected by a control system 27. Typically, the control system 27 will comprise an electronic control system which will be an integral part of the control system of the AMS.

The control system 27 is arranged to select one or more of a number of techniques for cooling the cow 5 depending upon the ambient conditions and the condition of the particular cow 5 in question.

In this latter regard, it may be determined on interrogating the RFID tag that the cow 5 located in the milking stall 7 has a particular medical condition which will affect the cooling method to be used. For example, the cow may be pregnant. As such, the control system 27 will select a tailored cooling regime for the cow 5. If it is determined that more cooling is required after milking, then the Smart Selection Gate 62 will be operated automatically so as to direct the cow in question back to the cooling area 50. This is achieved by opening the first gate 64 and closing the second gate 68. Both gates 64, 68 are shown closed in Figure 1.

The cooling method selected by the control system 27 may also include the length of time the cow 5 is to be subjected to the or each cooling technique. If cooling is undertaken during the milking process and it is determined that milking will have finished before the condition of the cow 5 has been brought to within an acceptable limit, then the chosen cooling method will include one or more cooling techniques applied to the cow once it has left the milking stall 7. It will be appreciated that the period of time the cow 5 is subjected to a cooling technique is selected so as to ensure the condition (for example, thermal comfort) of the cow 5 is brought to within an acceptable limit.

The facility shown in Figure 1 determines the level of heat stress of a cow by reference to the body temperature of the animal, which is measured by a bolus *carried in vivo.* The bolus 23 transmits temperature data upon interrogation by one of the aforementioned external transmitter/receiver (as described above). However, the bolus 23 may transmit data indicative of the animal's respiration rate, either instead of or in addition to the temperature data. The respiration rate of a cow is known to indicate the level of heat stress experienced by the cow. As will be understood by those skilled in the art, the respiration rate may also be determined by means of a laser device located externally to the cow.

The present invention is not limited to the specific embodiment described above. Alternative arrangements will be apparent to a reader skilled in the art. For example, the milking area may be operated manually rather than automatically as an AMS.

The following methods may be provided as recited in the following numbered statements 1 to 29 (which statements are not to be considered as claims).
1. A method of increasing the milk productivity of an animal, in particular a cow, comprising the step of determining the condition of the animal and/or of the environment in which the animal is located; characterised by the further steps of selecting a method of cooling the animal, wherein the selected cooling method is chosen on the basis of said determined condition; and cooling the animal with the selected cooling method.
2. A method as in 1, wherein the step of selecting a method of cooling comprises the step of selecting the duration of cooling required in order to bring the condition of the animal to within an acceptable limit.
3. A method as in 1 or 2, wherein the step of selecting a method of cooling comprises the step of selecting one or more of a plurality of cooling techniques available for cooling the animal.
4. A method as in 3, wherein the one or more selected cooling techniques are chosen in order to bring the condition of the animal to within an acceptable limit within a predetermined acceptable period of time.
5. A method as in 3 or 4, wherein said plurality of available cooling techniques comprises one or more of (i) wetting the animal; (ii) blowing air over the animal; (iii) wetting the animal and blowing air over the wet parts of the animal; and (iv) reducing the temperature of ambient air in the vicinity of the animal.
6. A method as in any of 3 to 5, wherein said plurality of available cooling techniques comprises cooling an area of the animal comprising the back and/or sides of the animal by flowing a fluid over said area.
7. A method as in 6, wherein said fluid is air.
8. A method as in 6, wherein said fluid comprises water.
9. A method as in 6, wherein said fluid initially comprises water, so as to wet said area of the animal, and is then air, so as to evaporate said water from said area.
10. A method as in 8 or 9, wherein said water is entrained in a flow of air.
11. A method as in any of 7, 9 and 10, wherein said air has been cooled so as to have a temperature below that of the ambient air.
12. A method as in any of 8, 9 and 10, wherein said water has been cooled so as to have a temperature below that of the ambient air.
13. A method as in any of the preceding numbered statements, wherein the condition of the animal is determined with reference to a signal sent from a transmitter carried by the animal.
14. A method as in 13, wherein the signal sent from the transmitter indicates the temperature of the animal's skin and/or udder.
15. A method as in 13 or 14, wherein the transmitter is carried *in vivo* by the animal.
16. A method as in any of the 13, 14 and 15, wherein the transmitter is a bolus.
17. A method as in any of 13 to 16, wherein the signal sent by the transmitter is a radio frequency signal.
18. A method as in any of the preceding numbered statements, wherein the condition of the animal is the level of thermal comfort of the animal.
19. A method as in any of the preceding numbered statements, wherein the condition of the animal is determined with reference to the respiration rate of the animal.
20. A method as in any of the preceding numbered statements, wherein the condition of the animal is determined when the animal is located in a milking stall.
21. A method as in 20, wherein the animal is cooled with the selected cooling method in the milking stall.
22. A method as in 20 or 21, wherein the animal is cooled before entering the milking stall.
23. A method as in any of 20, 21 and 22, wherein the animal is cooled with the selected cooling method after having left the milking stall.
24. A method as in 22, wherein the animal is cooled after having left the milking stall as well as before entering the milking stall, said cooling being completed with the animal located in substantially the same area.
25. A method as in 24, wherein the animal is cooled after leaving the milking stall with the selected cooling method.
26. A method comprising the steps of:
   (i) cooling an animal, in particular a cow, in a cooling area;
   (ii) milking said animal; and
   (iii) determining whether further cooling of the animal is required;
   characterised by the step of:
   (iv) returning the animal to said cooling area of further cooling is determined as being required.
27. A method as in 26, further comprising the step of:
   (v) further cooling the returned animal in said cooling area.
28. Apparatus for undertaking the method as in any of 1 to 27.
29. Apparatus for automatically undertaking the method as in any of 1 to 27.

## Claims

1. A milking facility (1) for milking an animal (5), in particular a cow, the milking facility comprising: a cooling area (50) comprising means for cooling an animal; a milking area (7) comprising means for milking an animal; and animal control means (62) for controlling the route along which an animal is able to walk, the cooling and milking areas being located so that an animal is able to walk from the cooling area to the milking area during use of the facility; the facility being **characterised in that** the control means (62) selectively directs an animal back to said cooling area after milking of the animal in the milking area.

2. A milking facility as claimed in claim 1, further comprising means for determining whether or not cooling of an animal is required (27).

3. A milking facility as claimed in claim 2, wherein said control means (62) directs an animal back to said cooling area (50) in response to a determination from said determining means (27) that cooling of the animal (5) is required.

4. A milking facility as claimed in claim 2 or 3, wherein said determining means (27) comprises a receiver (21) for receiving an RF signal transmitted (23) by a transmitter carried by an animal.

## Patentansprüche

1. Melkeinrichtung (1) zum Melken eines Tiers (5), insbesondere einer Kuh, wobei die Melkeinrichtung Folgendes umfasst: einen Kühlbereich (50), der Mittel zum Kühlen eines Tiers umfasst; einen Melkbereich (7), der Mittel zum Melken eines Tiers umfasst; sowie ein Tierlenkmittel (62) zum Beeinflussen des Wegs, auf dem ein Tier laufen kann, wobei der Kühl- und der Melkbereich so platziert sind, dass während der Nutzung der Einrichtung ein Tier vom Kühlbereich zum Melkbereich laufen kann; wobei die Einrichtung **dadurch gekennzeichnet ist, dass** das Lenkmittel (62) ein Tier nach dem Melken des Tiers im Melkbereich gezielt zurück zu dem Kühlbereich führt.

2. Melkeinrichtung nach Anspruch 1, ferner umfassend Mittel zum Feststellen, ob ein Tier gekühlt werden muss (27).

3. Melkeinrichtung nach Anspruch 2, wobei das Lenkmittel (62) auf die Feststellung des Feststellmittels (27) hin, dass ein Tier (5) gekühlt werden muss, das Tier zurück zu dem Kühlbereich (50) führt.

4. Melkeinrichtung nach Anspruch 2 oder 3, wobei das Feststellmittel (27) einen Empfänger (21) zum Empfangen eines HF-Signals umfasst, das von einem Sender gesendet (23) wird, den ein Tier trägt.

## Revendications

1. Installation de traite (1) destinée à la traite d'un animal (5), en particulier une vache, l'installation de traite comprenant : une zone de refroidissement (50) comprenant un moyen servant à refroidir un animal ; une zone de traite (7) comprenant un moyen servant à traire un animal ; et un moyen de contrôle (62) de l'animal servant à contrôler le chemin le long duquel un animal est apte à marcher, les zones de refroidissement et de traite étant situées de telle manière qu'un animal est apte à marcher de la zone de refroidissement à la zone de traite pendant l'utilisation de l'installation ; l'installation étant **caractérisée en ce que** le moyen de contrôle (62) dirige un animal de manière sélective de façon à ce qu'il retourne à la zone de refroidissement après la traite de l'animal dans la zone de traite.

2. Installation de traite selon la revendication 1, comprenant en outre un moyen servant à déterminer si le refroidissement d'un animal est nécessaire (27) ou pas.

3. Installation de traite selon la revendication 2, dans lequel ledit moyen de contrôle (62) dirige un animal de façon à ce qu'il retourne à ladite zone de refroidissement (50) en réaction à une détermination dudit moyen de détermination (27) selon laquelle le refroidissement de l'animal (5) est nécessaire.

4. Installation de traite selon la revendication 2 ou 3, dans laquelle ledit moyen de détermination (27) comprend un récepteur (21) destiné à recevoir un signal RF émis (23) par un émetteur porté par un animal.
